# FASCICULE DE BREVET EUROPEEN

(11) **EP 1 544 032 B1**
(45) Date de publication et mention de la délivrance du brevet: **10.02.2010**
(21) Numéro de dépôt: 03293153.7
(22) Date de dépôt: 15.12.2003
(51) Int. Cl.: B60Q 1/04

(54) **Support de bloc optique pour véhicule automobile, bloc optique, ensemble d'une face avant technique et d'un tel support et/ou d'un bloc optique**
Halterung für KFZ-Beleuchtungsanordnung, Beleuchtungsanordnung und Baugruppe mit einem Frontmodul und einer solchen Halterung bzw. Beleuchtungsanordnung
Mounting bracket for vehicular lamp module, lamp module, assembly comprising a front end module, said mounting bracket and/or lamp module

(43) Date de publication de la demande: 22.06.2005
(73) Titulaire: COMPAGNIE PLASTIC OMNIUM, 69007 Lyon (FR)
(72) Inventeur: Decker, Laurent, 69100 Villeurbanne (FR); Ben Mariem, Naoufil, 69150 Decines Charpieu (FR); Cheron, Hugues, 01800 Meximieux (FR); Andre, Gérald, 01500 Amberieu en Bugey (FR)
(74) Mandataire: Remy, Vincent Noel Paul

(56) Documents cités:
- EP-A- 1 398 209
- DE-A- 4 021 255
- DE-A- 19 632 688
- US-B1- 6 199 817

## Description

La présente invention concerne un moyen de fixation d'un bloc optique sur un véhicule automobile.

On sait que les blocs optiques d'un véhicule automobile doivent généralement être montés sur le véhicule de façon très précise par rapport aux ailes ou à d'autres pièces de carrosserie du véhicule, afin de répondre à des critères esthétiques de plus en plus précis.

On connaît de EP-A1 398 209, DE 19 632 688 A et DE 40 21255 A des exemples de montage de blocs optiques sur le véhicule.

Généralement, un bloc optique pour un module de face avant est monté sur le véhicule en trois étapes.

Dans la première étape, le bloc optique est fixé dans une position théorique sur la face avant technique du véhicule.

Dans la deuxième étape, la face avant technique est montée et fixée sur le bloc avant du véhicule automobile, lequel comporte notamment des pièces de carrosserie telles que les ailes avant.

La troisième étape consiste en une mise en référence précise du bloc optique par rapport aux pièces de carrosserie du bloc avant. En effet, on sait que de tels blocs avant présentent des dispersions dimensionnelles relativement importantes entre les véhicules, de sorte que le positionnement théorique des projecteurs s'avère insuffisant. Le constructeur n'a alors d'autre recours que de retoucher artisanalement chaque véhicule. Pour cela, un opérateur repositionne le bloc optique par rapport aux autres pièces de carrosserie, en le déplaçant manuellement et en le poussant contre des cales.

DE 196 32 688 A divulgue par ailleurs le préambule de la revendication 1.

Le problème consiste en ce que ce déplacement et ce calage du bloc optique, qui sont entièrement manuels, coûtent cher en main d'oeuvre et en temps d'exécution.

La présente invention vise à remédier à cet inconvénient en proposant un support du bloc optique qui permet de mettre en référence le bloc optique lors des étapes de montage ou de fixation de la face avant technique sur le bloc avant de véhicule, c'est à dire lors de la deuxième étape de montage du bloc optique.

A cet effet, l'invention a pour objet un support d'un bloc optique pour véhicule automobile, selon la revendication 1..

Ainsi, grâce à l'invention, le bloc optique est guidé, par exemple au moyen d'une glissière, de façon à le déplacer selon une trajectoire prédéterminée vers sa position de mise en référence, lors de l'étape de montage ou de fixation de la face avant technique sur le bloc avant du véhicule, ce qui évite la troisième étape de réglage artisanal.

Selon l'invention, le support de bloc optique comporte un mécanisme pour exercer une force de déplacement sur le bloc optique.

Ainsi, ce mécanisme de déplacement assiste l'opérateur lors du montage, afin de déplacer aisément et efficacement le bloc optique pour le mettre en référence sur le bloc avant. Cette mise en référence peut ainsi être exécutée, de façon rapide et donc économique.

Un tel mécanisme peut prendre appui sur le module d'équipement ou sur une pièce de carrosserie du véhicule.

De façon optionnelle, un tel mécanisme comporte un pignon destiné à entraîner une crémaillère.

Grâce à ce système de pignon et de crémaillère, le mécanisme transforme un mouvement de rotation de l'opérateur en un mouvement de déplacement du support selon une trajectoire éventuellement curviligne.

Eventuellement, le pignon comporte un trou apte à recevoir une vis et des butées positionnées et tarées pour fléchir lors de l'insertion de la vis dans le trou et bloquer sa rotation, de façon que la vis ainsi bloquée fasse tourner le pignon, puis pour céder lorsque la vis exerce un couple supérieur à un seuil prédéterminé, de sorte que la vis se visse dans un écrou agencé derrière le support.

Ainsi, lorsque le bloc optique arrive en butée contre l'aile, la vis exerce un couple supérieur à ce seuil, ce qui va faire céder les butées, de façon à fixer définitivement le support et donc le bloc optique arrivé en butée contre l'aile, de sorte que le bloc optique est fixé en position de mise en référence.

Par ailleurs, un tel support de bloc optique peut comporter des nervures de rigidification. Ainsi, outre sa fonction de déplacement du bloc optique, le support est suffisamment rigide pour porter le bloc optique lors de son réglage ou avant son montage final sur le bloc avant.

Un support de bloc optique selon l'invention peut en outre comporter l'une ou plusieurs des caractéristiques suivantes :
- le guidage du bloc optique se fait globalement selon la direction transversale du véhicule ; le moyen de guidage est agencé pour que, le support étant monté sur le module d'équipement, le montage ou la fixation du module d'équipement sur le véhicule automobile provoque un déplacement du bloc optique le rapprochant d'une pièce de carrosserie ;
- le support comporte un indexage destiné à fixer provisoirement le bloc optique sur le module d'équipement avant son déplacement ;
- le support comporte des fixations permanentes au bloc optique;
- le moyen de guidage est une lumière de forme oblongue ;
- le mécanisme de déplacement comprend une forme de recentrage;
- le support permet de monter ledit bloc optique déplaçable par rapport à une aile de véhicule automobile;
- le support permet de monter ledit bloc optique déplaçable par rapport à un pare-chocs de véhicule automobile ; et
- le support comporte des moyens de plaquage d'un pare-chocs de véhicule automobile contre le support.

L'invention a également pour objet un bloc optique pour véhicule automobile, comportant une partie constituant un support du type précité.

L'invention a également pour objet un ensemble d'un module d'équipement et d'un support de bloc optique ou d'un bloc optique du type précités.

Le module d'équipement d'un tel ensemble est une face avant technique. Ainsi, le support peut aussi bien être fixé à la traverse qu'à une partie de la face avant technique fixée au droit d'un longeron, selon l'encombrement de ces pièces.

Eventuellement, dans un tel ensemble, les moyens de guidage du support coopèrent avec des moyens de guidage agencés sur le module d'équipement.

L'invention a enfin pour objet un ensemble de type précité, et d'une pièce de structure du véhicule, dans lequel le support comporte des moyens de fixation à la pièce de structure.

L'invention sera mieux comprise à la lecture de la description qui va suivre, donnée uniquement à titre d'exemple et faite en se référant aux dessins dans lesquels :
- la figure 1 est une vue en perspective d'un support de bloc optique monté sur une traverse de véhicule automobile, selon un mode de réalisation qui ne fait pas partie de la présente invention;
- la figure 2 est une vue de dessus du mécanisme de déplacement du bloc optique de la figure 1 ;
- la figure 3 est une coupe selon III-III sur la figure 1 du support de bloc optique, fixé sur la traverse du véhicule ;
- la figure 4 est une coupe analogue à la figure 3 d'un support de bloc optique selon un mode de réalisation de l'invention, fixé sur la traverse ainsi que sur la structure du véhicule ;
- la figure 5 est une coupe perpendiculaire à la direction Y de la partie supérieure du bloc optique de la figure 1, une fois mis en référence sur le véhicule ;
- la figure 6 est un vue en perspective schématique d'un support de bloc optique selon un autre mode de réalisation de l'invention ;
- la figure 7 est une vue de dessus du support de la figure 6 lorsqu'il est monté sur une face avant technique ; et
- la figure 8 est une section selon VIII-VIII de la figure 7.

Dans la présente description, un seul côté du véhicule est considéré, l'homme du métier pourra aisément appliquer les enseignements fournis aux deux blocs optiques du véhicule.

Par ailleurs, la direction X correspond à la direction de déplacement du véhicule, la direction Y à la direction transversale du véhicule et la direction Z à la direction verticale.

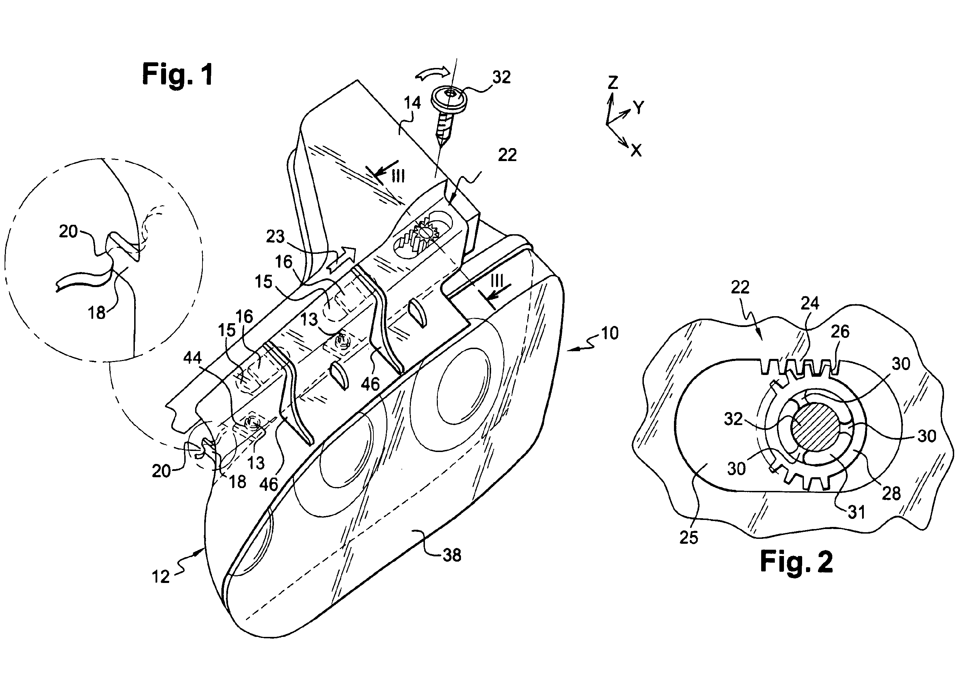

On a représenté sur la figure 1 un bloc optique 10, destiné à être monté à l'avant gauche d'un véhicule automobile. Ce bloc optique est porté par un support 12, fixé à une traverse 14 de la face avant technique du véhicule. Le support 12 est fixé au bloc optique grâce à des fixations 13, solides et permanentes.

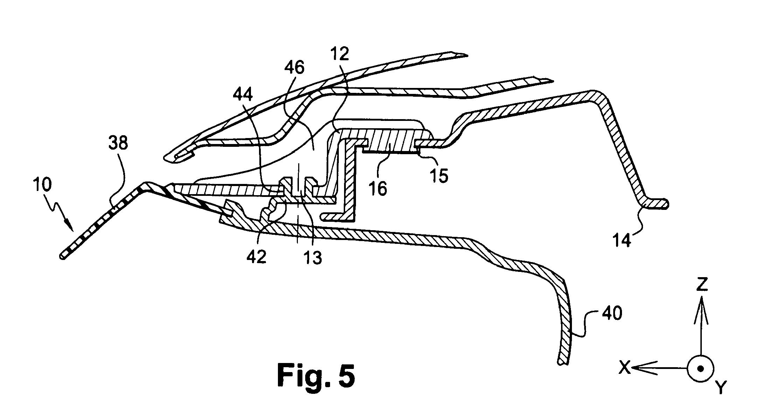

On peut voir sur la figure 5 comment est fixé le bloc optique 10 sur le support 12. Le bloc optique 10 comporte une vitre 38 et un boîtier 40. Le boîtier 40 comporte une patte de fixation 42, agencée en saillie de sa paroi supérieure. Cette patte de fixation 42 comporte des clips 13 issus de moulage, et destinés à être insérés dans des orifices 44 agencés dans le support 12.

Comme le support 12 peut avoir à supporter le bloc optique 10 lors de phases de réglage, il est placé de préférence à la verticale du centre de gravité du bloc 10, de façon à assurer cette fonction de façon optimale.

Par ailleurs, le support 12 comporte des nervures 46 de rigidification destinées à le consolider. En effet, ce support doit être suffisamment solide pour porter le bloc optique lorsque celui-ci n'est pas encore soutenu par les organes inférieurs du véhicule, c'est-à-dire par exemple lors du trajet entre l'usine d'assemblage de la face avant technique et l'usine d'assemblage de la face avant technique sur le bloc avant du véhicule.

Sur la figure 1, le bloc optique 10 est en cours de mise en référence par rapport à une aile avant gauche, non représentée. La mise en référence correspond à un positionnement du bloc optique tel que, d'une part, le jeu selon la direction Y entre le vitrage 38 du bloc optique et l'aile est prédéterminé, et d'autre part, le vitrage 38 du bloc optique arrive à affleurement avec l'aile selon la direction X.

Le montage du bloc optique avec son support 12 sur le véhicule, selon le mode de réalisation décrit, se fait en trois étapes.

La première étape consiste à monter le bloc optique 10 et son support 12 sur la face avant technique, en dehors du véhicule. Comme il n'est pas possible de mettre en référence le bloc optique sans les ailes, cette première étape de montage n'est pas une mise en référence du bloc optique mais une fixation provisoire, éventuellement par des moyens fusibles (ou aptes à se rompre) en vue de la mise en référence.

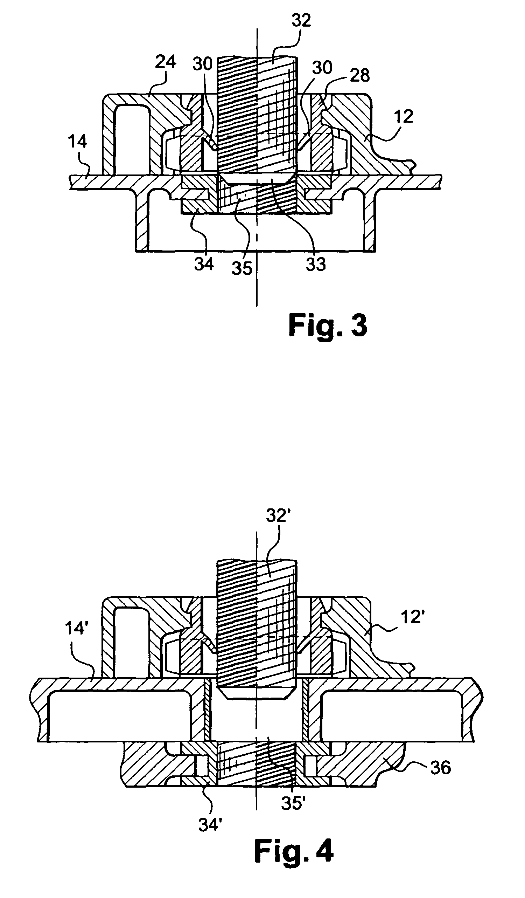

Cette première étape de montage consiste à assujettir le bloc optique 10 à la traverse 14, laquelle comporte à cet effet deux lumières 15, oblongues dans la direction Y. Ces lumières 15 sont destinées à coopérer avec deux champignons 16, visibles sur la figure 5, venus de matière avec le support 12, de façon à leur permettre de glisser dans la direction Y. Ainsi, lorsque les champignons 16 sont insérés dans les lumières 15 de la traverse 14, le support 12, et donc le bloc optique 10, sont fixés dans les directions X et Z tout en pouvant glisser dans la direction Y. Pour permettre les différentes manipulations au cours du montage, le bloc optique 10 est positionné provisoirement en Y sur la traverse 14, grâce à un ergot 18 agencé sur l'arrière du support 12 et destiné à s'engager dans une encoche 20 de la traverse. Cette position provisoire du support sur la traverse 14 correspond à une position dans laquelle une lumière 25 de forme oblongue, agencée dans l'épaisseur de la partie supérieure du support 12, est située en regard d'un orifice 35, agencé dans la traverse 14, que l'on peut voir sur la figure 3.

La deuxième étape consiste à monter la face avant technique, munie du bloc optique provisoirement positionné, sur le bloc avant du véhicule, l'aile étant déjà en place sur le véhicule.

La troisième étape consiste, une fois que la face avant technique est montée sur le véhicule, à mettre en référence le bloc optique 10 par rapport à l'aile. Pour cela, on déplace le bloc optique en direction de l'aile. La direction de déplacement du bloc optique est la direction transversale Y du véhicule. Selon un autre mode de réalisation non représenté, la direction de déplacement dépend de la direction d'un jeu constitué par le bloc optique et la pièce de carrosserie.

A cet effet, un mécanisme de déplacement 22 permet de mettre en mouvement le support 12, donc le bloc optique 10, de façon à le rapprocher de l'aile selon la flèche 23 (figure 1).

Le mécanisme 22, qui est représenté de façon détaillée sur la figure 2, comporte une crémaillère 24, munie de dents 26, agencée sur un côté de la lumière 25 du support 12.

Cette crémaillère 24 est entraînée par un pignon 28 qui comporte des dents périphériques 29, destinées à s'engrener avec les dents 26 de la crémaillère 24.

Le pignon 28 comporte un trou central 31, destiné à recevoir une vis 32, dans lequel font saillie trois butées 30 en forme de languettes concentriques en matière plastique souple.

Lorsqu'un opérateur introduit la vis 32 dans le trou 31 du pignon 28, celle-ci s'enfonce dans le trou 31, en faisant fléchir les butées 30 sur son passage, jusqu'à ce que son extrémité 33 vienne en butée dans un écrou serti 34 agencé sur la traverse 14, cette extrémité 33 s'introduisant en partie dans le trou de l'écrou 34.

Lorsque l'opérateur commence à tourner la vis 32, la rotation de celle-ci dans le trou 31 est bloquée par les butées 30 qui s'appuient contre le filet de la vis 32. Comme ces butées 30 ont une résistance plus importante que celle du roulement du pignon 28 dans la crémaillère 24, la rotation de la vis 32, bloquée par les butées, fait tourner le pignon 28 autour de l'axe de rotation constitué par la vis 32. Comme la vis 32 est en partie insérée dans l'écrou 34, cet axe de rotation est immobilisé par rapport à la traverse 14.

La résistance des butées 30 est suffisante pour que, au début de la rotation du pignon 28, l'ergot 18 du support 12 fléchisse et se rompe dans l'encoche 20, de façon à libérer le support 12 de sa position de fixation provisoire. Alors, le support 12, et donc le bloc optique 10, peuvent coulisser dans la direction Y, grâce aux moyens de guidage constitués par les champignons 16 glissant dans les lumières 15.

Ainsi, la rotation du pignon 28 entraîne la crémaillère 24 et donc le support 12, de façon à déplacer le bloc optique dans le sens de la flèche 23, en direction de l'aile.

Lorsqu'il arrive en butée contre l'aile, ou contre des cales non représentées, le bloc 10 est mis en référence et peut donc être fixé définitivement à la traverse 14.

Comme le bloc optique 10 est en butée, le pignon 28 ne peut plus tourner. Par conséquent, lorsque l'opérateur continue de tourner la vis 32, il exerce une force supérieure, ce qui fait plier les butées 30. Une fois ces butées 30 pliées, elles n'opposent plus aucune résistance à la vis, qui s'enfonce de façon classique dans l'écrou 34, de manière à visser définitivement le support 12 sur la traverse 14.

Le montage du bloc optique 10 sur le véhicule est alors terminé.

Selon d'autres modes de réalisation non représentés, les butées 30 ne sont pas pliées mais rompues ou franchies en force.

On peut voir sur la figure 3 que la vis 32 fixe le support 12 à la traverse 14 grâce à un écrou serti 34 agencé dans l'orifice 35 de la traverse 14.

Selon un mode de réalisation de l'invention, représenté sur la figure 4, la vis 32' traverse un orifice 35' agencé dans la traverse 14', et fixe en outre le support 12' sur une pièce de structure 36 du véhicule. Dans ce cas, un écrou 34', monté flottant dans la pièce de structure 36, permet de fixer la vis 32' au support 12' et à la traverse 14'. Ce mode de réalisation permet de consolider la fixation du support 12' et de profiter de cette fixation du support sur la traverse 14' pour fixer la traverse 14' sur la pièce de structure 36.

Parmi les avantages de ce mode de réalisation de l'invention, on notera que l'opérateur de montage du bloc optique, au lieu d'avoir à contrôler le jeu entre le bloc optique et l'aile puis éventuellement à repositionner le bloc optique, a uniquement besoin de positionner définitivement le bloc optique en butée contre l'aile, en vissant la vis 32, sans passer par l'étape aléatoire de contrôle. L'opérateur est par ailleurs assisté, lors de l'étape de positionnement, par le mécanisme 22, de façon à pouvoir déplacer le bloc optique uniquement en vissant la vis 32 sur la face avant technique.

Un autre avantage du support 12 comportant le mécanisme 22 consiste en ce qu'il simplifie le travail effectué sur la chaîne de montage, sans pour autant rajouter de matériel supplémentaire sur celle-ci.

Selon un mode de réalisation de l'invention non représenté, un pignon similaire au pignon 28 peut être solidaire du support de bloc optique, tandis qu'une crémaillère est solidaire de la face avant technique. Dans ce cas, le pignon et la crémaillère coopèrent de la même façon que précédemment, de manière à déplacer le support vers l'aile lorsque l'on tourne une vis dans le pignon.

Par ailleurs, selon un autre mode de réalisation non représenté, l'indexage du bloc optique lors de la première étape de montage ne se fait pas grâce à l'insertion de l'ergot 18 dans la rainure 20, mais grâce à un blocage provisoire du pignon 28 de façon à immobiliser le support 12. Ce blocage se fait par exemple au moyen d'une butée en saillie du support 12, agencée dans la lumière 25, et intercalée entre deux dents du pignon 28, de façon à l'empêcher de tourner. Au début de la mise en référence du bloc optique, l'opérateur casse cette butée lorsqu'il commence à tourner la vis dans le pignon, de façon à permettre à celui-ci de tourner et de positionner le bloc optique comme décrit précédemment.

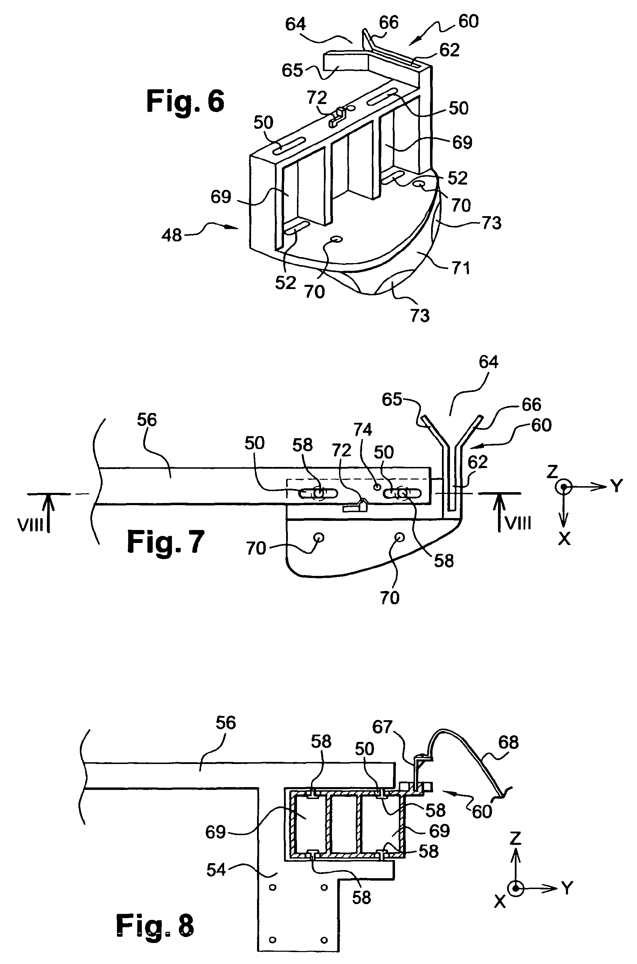

Selon le mode de réalisation de la figure 6, un support 48 de bloc optique selon l'invention comporte des moyens de fixation provisoire qui constituent des moyens de guidage 50, 52. Ces moyens permettent de fixer le support 48 selon les directions X et Z, en le laissant libre dans la direction Y. Sur la figure, les moyens 50, 52 sont des trous oblongs. Selon un autre mode de réalisation, ils pourraient être des glissières.

Deux de ces moyens 52 sont situés sur la partie inférieure du support 48 pour fixer ce support à une partie 54 de la face avant technique agencée au droit de la partie supérieure d'un longeron du véhicule, comme on peut le voir sur la figure 8. Les deux autres moyens 50 sont situés sur la partie supérieure du support 48, pour le fixer au droit de la traverse 56 de la face avant technique.

Comme on peut le voir sur la figure 8, les moyens 50, 52 permettent une fixation à la face avant technique 54, 56 dans les directions X et Z, et autorisent un déplacement dans la direction Y, grâce à des champignons 58, solidaires de la face avant technique 54, 56.

Par ailleurs, on peut voir sur la figure 6 que le support 48 comporte, sur sa partie supérieure, un bras 60, constituant un mécanisme de déplacement selon l'invention, comportant une fente 62 s'étendant selon la direction X, prolongée par une forme de recentrage 64, elle-même constituée par deux parois divergentes 65 et 66 formant un V, agencées de façon à accueillir un support d'aile 67, qui est une pièce rigide, connue en elle-même, solidaire du retour intérieur de l'aile 68.

Le support 48 est par ailleurs ajouré, grâce à des lumières 69, de façon à utiliser peu de matière et le rendre plus léger.

Sur les figures 6, 7 et 8, le bloc optique n'est pas représenté pour simplifier les figures.

On monte le bloc optique sur le véhicule en exécutant les étapes suivantes.

Le bloc optique est tout d'abord pré-assemblé avec le support 48 par des moyens de fixation 70 permanents classiques. Puis, selon une première étape, l'ensemble support 48 / bloc optique est monté sur la face avant technique, avec un positionnement provisoire dans la direction transversale Y. Au cours de cette première étape, les champignons 58 sont insérés dans les moyens de guidage 50, 52 situés sur le support 48, de façon à fixer le support 48 par rapport à la face avant technique dans les directions X et Z et à lui permettre de glisser dans la direction Y. Eventuellement, on peut retenir provisoirement le support 48 dans la direction Y grâce à un doigt d'indexage souple 72.

La seconde et dernière étape consiste à monter la face avant technique sur le bloc avant, l'aile étant déjà en place.

Lors de ce montage, on rapporte la face avant technique sur le bloc avant selon la direction X. L'une des deux parois 65, 66 constituant la forme de recentrage 64 du moyen de guidage 60 rencontre le support d'aile 67 et glisse contre ce support en guidant le support 48 dans la direction Y, jusqu'à ce que le support d'aile 67 pénètre complètement dans la fente 62 du bras 60 et donc que le support 48 soit positionné par rapport à l'aile 68.

Cette position correspond à la position de mise en référence du bloc optique par rapport à l'aile 68. Il peut alors être fixé définitivement par des moyens classiques, par exemple par une vis 74 de fixation permanente.

Eventuellement, ce verrouillage peut simultanément fixer la face avant technique par rapport à une pièce de structure du bloc avant.

Par ailleurs, on peut voir sur la figure 6 que le support 48 comporte, sous sa partie inférieure, une plage 71 servant de moyens de plaquage de la peau du pare-chocs du véhicule contre le support 48. Cette plage 71 comporte des languettes 73 destinées à retenir un rebord (non représenté) de la peau de pare-chocs.

Ainsi, un support selon l'invention permet de monter le bloc optique en le déplaçant dans la direction Y du véhicule, ce qui limite moins le design que dans les cas où l'on peut uniquement déplacer le bloc dans la direction X de montage.

Selon un mode de réalisation non représenté, un support selon l'invention peut être utilisé pour un bloc optique arrière de véhicule automobile, de façon à mettre en référence ce bloc optique par rapport à une aile arrière ou à un montant de baie du véhicule. Dans ce cas, le module d'équipement est un support arrière.

Selon un autre mode de réalisation non représenté, le support de bloc optique permet de le déplacer selon la direction Z, de façon à le mettre en référence par rapport à un pare-choc du véhicule. Ce support peut en outre permettre un déplacement en Y comme décrit ci-dessus.

On notera enfin que l'invention n'est pas limitée aux modes de réalisation précédemment décrits et est définie selon les revendications annexées.

## Revendications

1. Support (12, 48) d'un bloc optique (10) pour véhicule automobile, permettant de monter ledit bloc optique (10) déplaçable sur un module d'équipement (14, 54, 56), le module d'équipement étant une face avant technique, ledit support comportant un moyen de guidage (16, 50, 52) du bloc optique (10) suivant une trajectoire prédéterminée (Y) par rapport au module d'équipement (14, 54, 56), **caractérisé en ce que** le support comporte un mécanisme (22, 60) pour exercer une force de déplacement sur le bloc optique (10) pour le mettre en référence par rapport aux pièces de carrosserie lors des étapes de montage ou de fixation de la face avant technique.

2. Support (12) de bloc optique selon la revendication 1, dans lequel le mécanisme (22) prend appui suer le module d'équipement (14).

3. Support (48) de bloc optique selon les revendications 1 ou 2, dans lequel le mécanisme (60) prend appui sur une pièce de carrosserie (68) du véhicule.

4. Support (12, 48) de bloc optique selon l'une quelconque des revendications 1 à 3, dans lequel le guidage du bloc optique se fait globalement selon la direction transversale (Y) du véhicule.

5. Support (12, 48) de bloc optique selon l'une quelconque des revendications 1 à 4, dans lequel le mécanisme de déplacement (22, 60) comprend une forme de recentrage (60) agencée pour que, le support étant monté sur le module d'équipement (14, 54, 56), le montage du module d'équipement (14, 54, 56) sur le véhicule automobile provoque un déplacement du bloc optique le rapprochant d'une pièce de carrosserie (68).

6. Support (12) de bloc optique selon l'une quelconque des revendications 1 à 5, dans lequel le mécanisme (22) comporte un pignon (28) destiné à entraîner une crémaillère (24).

7. Support (12) de bloc optique selon la revendication 6, dans lequel le pignon (28) comporte un trou apte à recevoir une vis (32) et des butées (30) positionnées et tarées pour fléchir lors de l'insertion de la vis (32) dans le trou et bloquer sa rotation, de façon que la vis ainsi bloquée (32) fasse tourner le pignon (28), puis pour céder lorsque la vis exerce un couple supérieur à un seuil prédéterminé, de sorte que la vis (32) se visse dans un écrou (34) agencé derrière le support.

8. Support (12, 48) de bloc optique selon l'une quelconque des revendications 1 à 7, comportant un indexage (18, 72) destiné à fixer provisoirement le bloc optique (10) sur le module d'équipement (14, 54, 56) avant son déplacement.

9. Support (12, 48) de bloc optique selon l'une quelconque des revendications 1 à 8, comportant des fixations permanentes (13, 70) au bloc optique (10).

10. Support de bloc optique selon l'une quelconque des revendications 1 à 9, comportant des nervures de rigidification (46).

11. Support (48) de bloc optique selon l'une quelconque des revendications 1 à 10, dans lequel le moyen de guidage est une lumière (50, 52) de forme oblongue.

12. Support (12, 48) de bloc optique selon l'une quelconque des revendications 1 à 11, permettant de monter ledit bloc optique (10) et le support déplaçables par rapport à une aile (68) de véhicule automobile.

13. Support (12, 48) de bloc optique selon l'une quelconque des revendications 1 à 12, permettant de monter ledit bloc optique (10) et le support déplaçables par rapport à un pare-chocs de véhicule automobile.

14. Support (12, 48) de bloc optique selon l'une quelconque des revendications 1 à 13, comportant des moyens de plaquage (71) d'un pare-chocs de véhicule automobile contre le support (48).

15. Bloc optique (10) pour véhicule automobile, comportant une partie constituant un support selon l'une quelconque des revendications 1 à 14.

16. Ensemble d'un module d'équipement (14, 54, 56) et d'un support (12, 48) de bloc optique (10) selon l'une quelconque des revendications 1 à 14.

17. Ensemble d'un module d'équipement et d'un bloc optique selon la revendication 15.

18. Ensemble selon la revendication 16 ou 17, dans lequel les moyens de guidage (16, 50, 52) du support (12, 48) coopèrent avec des moyens de guidage (15, 58) agencés sur le modèle d'équipement (14, 54, 56).

19. Ensemble selon l'une quelconque des revendications 16 à 18, et d'une pièce de structure (36) de véhicule, dans le support (12') comporte des moyens de fixation (32', 34') à la pièce de structure.

## Claims

1. A support (12, 48) for a motor vehicle light unit (10), enabling said light unit (10) to be mounted movably on an equipment module (14, 54, 56), the equipment module being a front panel, said support including guide means (16, 50, 52) for guiding the light unit (10) along a predetermined path (Y) relative to the equipment module (14, 54, 56), the support being **characterized in that** it comprises a mechanism (22, 60) for exerting a movement force on the light unit (10) to put it into a reference position relative to bodywork parts during the steps of assembling or fastening the front panel.

2. A light unit support (12) according to claim 1, wherein the mechanism (22) bears on the equipment module (14) .

3. A light unit support (48) according to claim 1 or claim 2, wherein the mechanism (60) bears against a bodywork part (68) of the vehicle.

4. A light unit support (12, 48) according to any one of claims 1 to 3, wherein the light unit is guided generally along the transverse direction (Y) of the vehicle.

5. A light unit support (12, 48) according to any one of claims 1 to 4, wherein the movement mechanism (22, 60) includes a re-centering shape (60) arranged so that, with the support mounted on the equipment module (14, 54, 56) mounting the equipment module (14, 54, 56) on the motor vehicle causes the light unit to be moved towards a bodywork part (68).

6. A light unit support (12) according to any one of claims 1 to 5, wherein the mechanism (22) includes a gearwheel (28) for driving a rack (24).

7. A light unit support (12) according to claim 6, wherein the gearwheel (28) includes a hole suitable for receiving a screw (32) and abutments (30) that are positioned and rated to bend during insertion of the screw (32) into the hole and to prevent it from turning, so that the screw (32) blocked in this way causes the gearwheel (28) to turn, and then to give way when the screw exerts a torque greater than a predetermined threshold, such that the screw (32) screws into a nut (34) arranged behind the support.

8. A light unit support (12, 48) according to any one of claims 1 to 7, including indexing means (18, 72) for temporarily fastening the light unit (10) to the equipment module (14, 54, 56) before it is moved.

9. A light unit support (12, 48) according to any one of claims 1 to 8, including permanent connections (13, 70) to the light unit (10).

10. A light unit support according to any one of claims 1 to 9, including stiffener ribs (46).

11. A light unit support (48) according to any one of claims 1 to 10, wherein the guide means comprise a slot (50, 52) of oblong shape.

12. A light unit support (12, 48) according to any one of claims 1 to 11, enabling said light unit (10) and the support to be mounted to be movable relative to a motor vehicle fender (68).

13. A light unit support (12, 48) according to any one of claims 1 to 12, enabling said light unit (10) and the support to be mounted to be movable relative to a motor vehicle bumper.

14. A light unit support (12, 48) according to any one of claims 1 to 13, including means (71) for pressing a motor vehicle bumper against the support (48).

15. A motor vehicle light unit (10) including a portion constituting a support according to any one of claims 1 to 14.

16. An assembly of an equipment module (14, 54, 56) and a light unit support (12, 48) according to any one of claims 1 to 14.

17. An assembly of an equipment module and a light unit according to claim 15.

18. An assembly according to claim 16 or claim 17, wherein the guide means (16, 50, 52) of the support (12, 48) co-operate with guide means (15, 58) arranged on the equipment module (14, 54, 56).

19. An assembly according to any one of claims 16 to 18, and a vehicle structural part (36), wherein the support (12') includes fastener means (32', 34') for connection to the structural part.

## Patentansprüche

1. Halterung (12, 48) eines Beleuchtungsmoduls (10) für ein Kraftfahrzeug, die es gestattet, das Beleuchtungsmodul (10) verschiebbar auf einem Ausstattungsmodul (14, 54, 56) anzubringen, wobei es sich bei dem Ausstattungsmodul um eine technische Vorderfront handelt, wobei die Halterung ein Mittel zum Führen (16, 50, 52) des Beleuchtungsmoduls (10) entlang einer vorgegebenen Bahn (Y) in Bezug auf das Ausstattungsmodul (14, 54, 56) aufweist, **dadurch gekennzeichnet, dass** die Halterung einen Mechanismus (22, 60) zum Ausüben einer Verschiebekraft auf das Beleuchtungsmodul (10) aufweist, um es relativ im Verhältnis zu den Karosserieteilen während der Montageschritte oder der Befestigung der technischen Vorderfront anzuordnen.

2. Halterung (12) des Beleuchtungsmoduls (10) nach Anspruch 1, bei der der Mechanismus (22) auf dem Ausstattungsmodul (14) aufliegt.

3. Halterung (48) des Beleuchtungsmoduls (10) nach den Ansprüchen 1 oder 2, bei der der Mechanismus (60) auf einem Karosserieteil (68) des Fahrzeugs aufliegt.

4. Halterung (12, 48) des Beleuchtungsmoduls (10) nach einem der Ansprüche 1 bis 3, bei der die Führung des Beleuchtungsmoduls (10) vollständig in der Querrichtung (Y) des Fahrzeugs erfolgt.

5. Halterung (12, 48) des Beleuchtungsmoduls (10) nach einem der Ansprüche 1 bis 4, bei der der Verschiebemechanismus (22, 60) eine Nachzentrierungs-Form (60) umfasst, die so angeordnet ist, dass, wenn die Halterung am Ausstattungsmodul (14, 54, 56) befestigt ist, die Montage des Ausstattungsmoduls (14, 54, 56) am Kraftfahrzeug ein Verschieben des Beleuchtungsmoduls zur Folge hat und es an ein Karosserieteil (68) annähert.

6. Halterung (12) des Beleuchtungsmoduls (10) nach einem der Ansprüche 1 bis 5, bei der der Mechanismus (22) ein Ritzel (28) aufweist, das zum Eingriff in eine Zahnstange (24) vorgesehen ist.

7. Halterung (12) des Beleuchtungsmoduls (10) nach Anspruch 6, bei dem das Ritzel (28) eine Bohrung aufweist, die eine Schraube (32) und Anschläge (30) aufnehmen kann, die so positioniert und austariert sind, dass sie beim Einführen der Schraube (32) in die Bohrung nachgeben und derart ihre Drehung blockieren, dass sich das Ritzel (28) durch die dergestalt blockierte Schraube (32) dreht und anschließend nachgibt, wenn die Schraube ein Drehmoment ausübt, das höher ist als eine zuvor festgelegte Schwelle, in der Weise, dass sich die Schraube (32) in eine hinter der Halterung angeordnete Mutter (34) eindreht.

8. Halterung (12, 48) des Beleuchtungsmoduls (10) nach einem der Ansprüche 1 bis 7, die eine Indexierung (18, 72) aufweist, mittels derer das Beleuchtungsmodul (10) provisorisch am Ausstattungsmodul (14, 54, 56) vor seiner Verschiebung befestigt werden kann.

9. Halterung (12, 48) des Beleuchtungsmoduls (10) nach einem der Ansprüche 1 bis 8, die dauerhafte Befestigungen (13, 70) am Beleuchtungsmodul aufweist.

10. Halterung des Beleuchtungsmoduls (10) nach einem der Ansprüche 1 bis 9, die Versteifungsrippen (46) aufweist.

11. Halterung (48) des Beleuchtungsmoduls (10) nach einem der Ansprüche 1 bis 10, bei der das Mittel zum Führen ein Schlitz (50, 52) von länglicher Form aufweist.

12. Halterung (12, 48) des Beleuchtungsmoduls (10) nach einem der Ansprüche 1 bis 11, die es gestattet, das Beleuchtungsmodul (10) und die Halterung in Bezug auf einen Kotflügel (68) des Kraftfahrzeugs verschiebbar zu montieren.

13. Halterung (12, 48) des Beleuchtungsmoduls (10) nach einem der Ansprüche 1 bis 12, die es gestattet, das Beleuchtungsmodul (10) und die Halterung in Bezug auf einen Stoßfänger des Kraftfahrzeugs verschiebbar zu montieren.

14. Halterung (12, 48) des Beleuchtungsmoduls (10) nach einem der Ansprüche 1 bis 13, die Mittel zum Anpressen (71) des Stoßfängers eines Kraftfahrzeugs gegen die Halterung (48) aufweist.

15. Beleuchtungsmodul (10) für ein Kraftfahrzeug, das einen Bereich aufweist, der eine Halterung nach einem der Ansprüche 1 bis 14 darstellt.

16. Anordnung aus einem Ausstattungsmodul (14, 54, 56) und einer Halterung (12, 48) eines Beleuchtungsmoduls (10) nach einem der Ansprüche 1 bis 14.

17. Anordnung aus einem Ausstattungsmodul und einem Beleuchtungsmodul nach Anspruch 15.

18. Anordnung nach Anspruch 16 oder 17, bei der die Führungsmittel (16, 50, 52) der Halterung (12, 48) mit den am Ausstattungsmodul (14, 54, 56) angebrachten Führungsmitteln (15, 58) zusammenwirken.

19. Anordnung nach einem der Ansprüche 16 bis 18 und aus einem Fahrzeugstrukturteil (36), in dem die Halterung (12') Befestigungsmittel (32', 34') am Strukturteil aufweist.
